Europäisches Patentamt

European Patent Office

Office européen des brevets

(19)

(11) Publication number: **0 173 379**

**B1**

(12) EUROPEAN PATENT SPECIFICATION

(45) Date of publication of patent specification: **22.06.88**

(51) Int. Cl.⁴: **C 09 J 5/06,** C 08 J 5/12, C 08 L 53/02 // (C08L53/02, 101:00)

(21) Application number: **85201240.0**

(22) Date of filing: **26.07.85**

(54) Process for bonding polymeric and/or metal materials.

(30) Priority: **30.08.84 US 646279**

(43) Date of publication of application: **05.03.86 Bulletin 86/10**

(45) Publication of the grant of the patent: **22.06.88 Bulletin 88/25**

(84) Designated Contracting States: **BE DE FR GB IT NL SE**

(56) References cited:
DE-A-2 236 903
FR-A-2 375 983
FR-A-2 402 690
GB-A-1 596 898
US-A-3 620 875
US-A-3 917 607

(73) Proprietor: **SHELL INTERNATIONALE RESEARCH MAATSCHAPPIJ B.V.**
**Carel van Bylandtlaan 30**
**NL-2596 HR Den Haag (NL)**

(72) Inventor: **Durbin, Daniel Paul**
**807 Palm Grove Circle**
**Sugar Land Texas 77478 (US)**
Inventor: **Gergen, William Peter**
**11311 Hylander**
**Houston Texas 77070 (US)**
Inventor: **Lutz, Robert Gardiner**
**8322 Twining Oaks**
**Spring Texas 77379 (US)**

(74) Representative: **Aalbers, Onno et al**
**P.O. Box 302**
**NL-2501 CH The Hague (NL)**

Courier Press, Leamington Spa, England.

## 0 173 379

**Description**

The invention relates to a process for bonding polymeric and/or metal materials by contacting the surfaces of the materials to be bonded with a bonding composition.

The utilization of polymeric materials has been growing at an increasing rate especially in the automotive and construction areas. One of the limitations which has prevented utilization of these materials in some areas has been the availability of a rapid adhesion system permitting semistructural or structural bonding of the material to itself. In, for example, the automative area, stamped parts made of continuous glass fibre mat reinforced polypropylene represent a large potential market for such a bonding system.

Thermoplastic materials of similar as well as many that have dissimilar characteristics can be permanently connected through the heating of the interface to a critical temperature and applying an appropriate pressure with the heat at the critical temperature. In the past, bonding techniques have been developed which use the principle of induction heating to activate the bond interface and fuse the two abutting interfaces. These techniques have been proven and have been successful in bonding some difficult to bond materials such as polyethylene and polypropylene, as described in U.S. patent specifications 4,035,547, 4,067,765, 3,902,940 and 4,304,744.

One process is shown in U.S. patent specification 3,574,031 which discloses discrete susceptor particles in the fusion area subjected to a high-frequency magnetic induction field, generally in the radio-frequency range. The plastic material immediately adjacent to the particles is converted to a fluid state, either a liquid or at least a softened flowable state, as a result of the heat generated in the particles as such.

DE—A—2,236,903 concerns a process for bonding polymeric materials by contacting the surfaces to be bonded with a bonding material comprising a blend of one or more thermoplastic polymers and a monoalkyenylarene-diene block copolymer, and heating the bonding material.

FR—A—2,375,983 concerns a similar process for bonding polymeric and metal materials, the bonding material comprising a monoalkenylarene-diene block copolymer and any compatible thermoplastic polymer.

GB—A—1,596,898 is concerned with compositions containing a partially hydrogenated monoalkenylarene-diene block copolymer, a nitrile resin and a dissimilar engineering thermoplastic resin. These polymers form at least partial continuous interlocked networks with each other.

The joining of certain different particular plastics is extremely difficult because of the different sealing characteristics—thus, a particular optimum heat, pressure and time for the plastic of the one element may not be the same for the plastic of the second element. Although an intermediate bonding agent may contribute to an improved bond because of characteristics more compatible with the two different plastics, the results have not been considered highly satisfactory in many cases.

The present invention provides a process for bonding polymeric and/or metal materials by contacting the surfaces of the materials to be bonded with a bonding composition, characterized in that use is made of a bonding composition comprising an admixture obtained by intimately mixing:

(a) 4 to 96 parts by weight of a block copolymer comprising at least two monoalkenylarene polymer end blocks A and at least one substantially completely hydrogenated conjugated diene mid block B, said block copolymer having an 8 to 55 per cent by weight monoalkenylarene polymer block content, each polymer block A having an average molecular weight of between 5,000 and 125,000, and each polymer block B having an average molecular weight of between 10,000 and 300,000, and

(b) 96 to 4 parts by weight of one or more thermoplastic polymers at least one of which will adhere to each of the surfaces of the materials to be bonded, and heating the bonding composition so as to form a fusion bond.

The intimate mixing which takes place in the process according to the present invention results in two or more at least partially continuous interlocking phases. The at least partially continuous interlocking phases are also named "interpenetrating networks" and are also referred to herein as "IPN".

The bond produced by the process of the present invention has advantages over prior art bonds in that the bonding material contains an IPN and results in a desirable balance of properties, especially lap shear strength. In addition, it is possible to formulate a blend of polymers so as to get good adhesion to two different polymer surfaces by using the IPN blending technique without sacrificing the beneficial properties, e.g., adhesion and modulus associated with the individual polymers. Thus, the beneficial properties of two or more properties can be combined and retained in the IPN bond present in the bonding composition used in the process of the present invention.

The block copolymer used in the composition of the instant invention effectively acts as a mechanical or structural stabilizer which interlocks the polymer structure networks and prevents the consequent separation of the polymers during processing and their subsequent use. As defined more fully hereinafter, the resulting structure of the instant polyblend (short for "polymer blend") is that of two at least partially continuous interlocking networks. This interlocked structure results in a dimensionally stable polyblend that will not delaminate under stress, e.g., upon extrusion or subsequent use.

To produce stable blends it is necessary that the polymers have at least partially continuous networks which interlock with each other. In an ideal situation both polymers would have complete continuous

2

networks which interlock with each other. A partially continuous network means that a portion of the polymer has a continuous network phase while the other portion has a disperse phase structure. Preferably, a major proportion (greater than 50% by weight) of the partially continuous network is continuous.

Stable blends are produced over vary wide relative concentrations, for example, blends containing as little as 4 parts by weight of the block copolymer per 100 total in the blend or as high as 96 parts by weight per 100 total are attainable. As explained more fully hereinafter, the instant block copolymers have this ability to produce stable blends over a wide range of concentrations since they are oxidatively stable, possess essentially an infinite viscosity at zero shear rate, and retain network or domain structure in the melt.

The bonding compositions used in the process of the present invention have an unexpectedly superior balance of properties. Since each phase network is partially continuous in every phase, each network can donate independently to the blend properties and it is possible for additive relationships to exist in mechanical phenomena. For example, with regard to modulus related properties, at low volume fraction of the engineering resin, the elastic modulus, modulus temperature behaviour, and hardness are characteristic of a foamed resin structure with a density equivalent to the situation where the rubber volume is replaced by air. Another indication of the dominance of the resin skeletal system at low strain is the observation that in the binary system there is normally less than 5 points, and frequently less than two points, difference in Shore A hardness between blends of resin to elastomer of 1:1 and 3:1.

The bonding compositions used in the process according to the present invention also have an unobviously high structural integrity. Structural integrity means that without being stretched beyond its elastic limit, the polymer blend will retain its structure and be useful over a wide range of temperatures.

In addition, the bonding compositions used in the process according to the present invention approach more nearly the theoretical upper limits of the Tayakangi model for co-continuous versus parallel structures. One would typically expect that the blend of a rubber and an engineering thermoplastic would approach more nearly the theoretical lower limit of the Tayakangi model.

The bonding composition used in the process according to the present invention is disposed between the surfaces to be bonded and is heated to a temperature near the melt temperature of the thermoplastic polymer. A fusion bond is formed with the surfaces in contact with the bonding composition. The bonding material retains the outstanding property set present before bonding and imparts these desirable properties to the bond itself.

The block copolymers present in the bonding composition which is used in the process according to the present invention may have a variety of geometrical structures, since the desirable properties do not depend on any specific geometrical structure, but rather upon the chemical constitution of each of the polymer blocks. Thus, the structures may be linear, radial or branched so long as each copolymer has at least two polymer end blocks A and at least one polymer mid block B as defined above. Methods for the preparation of such polymers are known in the art. Particular reference will be made to the use of lithium-based catalysts and especially lithium-alkyls for the preparation of the precursor polymers (polymers before hydrogenation). U.S. patent specification 3,595,942 not only describes some of the polymers useful in the instant invention but also describes suitable methods for their hydrogenation. The structure of the polymers is determined by their methods of polymerization. For example, linear polymers result by sequential introduction of the desired monomers into the reaction vessel when using such initiators as lithium-alkyls or dilithiostilbene and the like, or by coupling a two-segment block copolymer with a difunctional coupling agent. Branched structures, on the other hand, may be obtained by the use of suitable coupling agents having a functionality with respect to the precursor polymers of three or more. Coupling may be effected with multifunctional coupling agents such as dihaloalkanes or dihaloalkenes and divinylbenzene as well as certain polar compounds such as silicon halides, siloxanes or esters of monohydric alcohols with carboxylic acids. The presence of any coupling residues in the polymer may be ignored for an adequate description of the polymers forming a part of the compositions of this invention. Likewise, in the generic sense, the specific structures also may be ignored. The invention applies especially to the use of selectively hydrogenated polymers having the configuration before hydrogenation of the following typical species:

polystyrene-polybutadiene-polystyrene (SBS)
polystyrene-polyisoprene-polystyrene (SIS)
poly(alpha-methylstyrene)-polybutadiene-poly(alpha-methylstyrene) and
poly(alpha-methylstyrene)-polyisoprene-poly(alpha-methylstyrene).

It will be understood that both blocks A and B may be either homopolymer or random copolymer blocks as long as each block predominates in at least one class of the monomers characterizing the blocks and as long as the A blocks individually predominate in monoalkylenylarenes and the B blocks individually predominate in dienes. The term "monoalkenylarene" will be taken to include especially styrene and its analogs and homologs including alpha-methylstyrene and ring-substituted styrenes, particularly ring-methylated styrenes. The preferred monoalkenylarenes are styrene and alpha-methylstyrene, and styrene is particularly preferred. The blocks B may comprise homopolymers of butadiene or isoprene and copolymers or one of these two dienes with a monoalkenylarene as long as the blocks B predominate in conjugated diene units. When the monomer employed is butadiene, it is preferred that between about 35

3

and about 55 mol per cent of the condensed butadiene units in the butadiene polymer block have 1,2 configuration. Thus, when such a block is hydrogenated, the resulting product is, or resembles, a regular copolymer block of ethylene and 1-butene (EB). If the conjugated diene employed is isoprene, the resulting hydrogenated product is or resembles a regular copolymer block of ethylene and propylene (EP).

Hydrogenation of the precursor block copolymers is preferably effected by use of a catalyst comprising the reaction products of an aluminiumalkyl compound with nickel or cobalt carboxylates or alkoxides under such conditions as to substantially completely hydrogenate at least 80% of the aliphatic double bonds while hydrogenating no more than about 25% of the alkenylarene aromatic double bonds. Preferred block copolymers are those where at least 99% of the aliphatic double bonds are hydrogenated while less than 5% of the aromatic double bonds are hydrogenated.

The average molecular weights of the individual blocks may vary within certain limits. In most instances, the monoalkenylarene blocks will have number average molecular weights between 5,000 and 125,000, preferably between 7,000 and 60,000 while the conjugated diene blocks either before or after hydrogenation will have average molecular weights between 10,000 and 300,000, preferably between 30,000 and 150,000. The total average molecular weight of the block copolymer is typically between about 25,000 and about 350,000 preferably between about 35,000 and about 300,000. These molecular weights are most accurately determined by tritium counting methods or osmotic pressure measurements.

The proportion of the monoalkenylarene blocks should be between 8 and 55% by weight of the block copolymer, preferably between about 10 and 30% by weight.

While the average molecular weight of the individual blocks is not critical, at least within the above specified limits, it is important to select the type and total molecular weight of the block copolymer in order to ensure the compatibility necessary to get the interlocking network under the chosen blending conditions. As discussed more fully hereinafter, best results are obtained when the viscosity of the block copolymer and the engineering thermoplastic resin are substantially the same at the temperature used for blending and processing. In some instances, matching of the viscosity of the block copolymer portion and the resin portion are best achieved by using two or more block copolymers or resins. For example, a blend of two block copolymers having different molecular weights or a blend of a hydrogenated SBS and hydrogenated SIS polymers may be employed.

Matching of the viscosity of the block copolymer portion and the engineering thermoplastic resin portion may also be accomplished by adding supplemental blending components such as hydrocarbon oils and other resins. These supplementary components may be blended with the block copolymer portion or the engineering thermoplastic resin portion, but it is preferred to add the additional components to the block copolymer portion. This pre-blended block copolymer composition is then intimately mixed with the engineering thermoplastic resin to form compositions according to the present invention.

The types of oils useful in the practice of this invention are those polymer extending oils ordinarily used in the processing of rubber and plastics, e.g. rubber compounding oils. Especially preferred are the types of oil that are compatible with the elastomeric segment of the block copolymer. While oils of higher aromatics content are satisfactory, those petroleum-based while oils having low volatility and less than 50% aromatics content as determined by the clay gel method of tentative ASTM method D 2007 are particularly preferred. The oils should additionally have low volatility, preferably having an initial boiling point above 260°C. The amount of oil employed varies from about 0 to about 100 phr (parts by weight per hundred parts by weight rubber, or block copolymer as in this case), preferably about 5 to about 30 phr.

The additional resins employed in the matching viscosities are flow promoting resins such as alpha-methylstyrene resins, and end block plasticizing resins. Suitable end block plasticizing resins include coumarone-indene resins, vinyltoluenealpha-methylstyrene copolymers, polyindene resins, and low molecular weight polystyrene resins (see U.S. patent specification 3,917,607). The amount of additional resin employed varies from about 0 to about 100 phr, preferably about 5 to about 25 phr.

Thermoplastics useful in the blend of the present invention include polyolefins, halogenated thermoplastics, thermoplastic polyesters, polyacetals, polyamides, thermoplastic polyurethanes, polycarbonates, polyamides, polysulphones, poly(aryl ethers), and nitrile barrier resins.

The polymers in the blend can be selected so as to obtain the best properties for the bond, for example, one component of the bonding blend could be the material to be bonded or it could be compatible with the material to be bonded.

The heating step can be accomplished by any convenient method. In simple systems, the bonding composition can be applied by manual means to an adherent, contacted with another adherent and the assembled system heated in a forced air oven until a thermoset bond results.

Additionally and preferably, electromagnetic heating can be utilized as a faster and more efficient means, especially where the substrates to be bonded are plastic materials. In addition to the formation of high strength bonds, electromagnetic bonding techniques aid in (a) fast bond setting times, and (b) automated part handling and assembly.

In practising the instant invention, electromagnetic heating can be employed with the bonding composition herein to adhere (1) plastic to plastic, (2) plastic to metal and (3) metal to metal. For example, dielectric heating can be used to bond (1) and (2) supra if the adhesive composition contains sufficient polar groups to heat the composition rapidly and allow it to bond the adherents. Inductive heating and ratio frequency energy can also be used to bond (1), (2) and (3). That is, when at least one of the adherents is an

4

electrically conductive or ferromagnetic metal, the heat generated therein is conveyed by conductance to the bonding composition. In the instance where both adherents are plastic, it may be necessary to add an energy absorbing material, i.e., an electrically conductive or ferromagnetic material, preferably in fibre or particle form (10—400 mesh, U.S. Sieve Series, sieve openings 2.00—0.037 mm) to the adhesive composition. The energy absorbing material is usually added in amounts ranging from 0.1 to 2 parts by weight, per 1 part by weight of the bonding composition. It is also possible to impregnate the plastic adherent at the bonding joint with particles of the energy absorbing material in order to use inductive heating, but care must be exercised that the plastic is not distorted.

The particulate electromagnetic energy absorbing material used in the adhesive composition when inductive heating is employed can be one of the magnetizable metals including iron, cobalt and nickel or magnetizable alloys or oxides of nickel and iron and nickel and chromium and iron oxide. These metals and alloys have high Curie points (388—1115°C).

Electrically conductive materials operable herein when inductive heating is employed include, but are not limited to, the noble metals, copper, aluminium, nickel, zinc, as well as carbon black, graphite and inorganic oxides.

There are two forms of high frequency heating operable herein, the choice of which is determined by the material to be adhered. The major distinction is whether or not the material is a conductor or non-conductor of electrical current. If the material is a conductor, such as iron or steel, then the inductive method is used. If the material is an insulator, such as wood, paper, textiles, synthetic resins, rubber, etc., then dielectric heating can·also be employed.

Most naturally occurring and synthetic polymers are non-conductors and, therefore, are suitable for dielectric heating. These polymers may contain a variety of dipoles and ions which orient in an electric field and rotate to maintain their alignment with the field when the field oscillates. The polar groups may be incorporated into the polymer backbone or can be pendant side groups, additives, extenders, pigments, etc. For example, as additives, glossy fillers such as carbon black at a one per cent level can be used to increase the dielectric response of the bonding composition. When the polarity of the electric field is reversed millions of times per second, the resulting high frequency of the polar units generates heat within the material.

The uniqueness of dielectric heating is in its uniformity, rapidity, specificity and efficiency. Most plastic heating processes such as conductive, convective or infrared heating are surface-heating processes which need to establish a temperature within the plastic and subsequently transfer the heat to the bulk of the plastic by conduction. Hence, heating of plastics by these methods is a relatively slow process with a non-uniform temperature resulting in overheating of the surfaces. By contrast, dielectric heating generates the heat within the material and is therefore uniform and rapid, eliminating the need for conductive heat transfer. In the dielectric heating system herein the electrical frequency of the electromagnetic field is in the range 1—3,000 megahertz, said field being generated from a power source of 0.5—1,000 kilowatts.

Induction heating is similar, but not identical, to dielectric heating. The following differences exist: (a) magnetic properties are substituted for dielectric properties; (b) a coil is employed to couple the load rather than electrodes or plates; and (c) induction heaters couple maximum current to the load. The generation of heat by induction operates through the rising and falling of a magnetic field around a conductor with each reversal of an alternating current source. The practical deployment of such field is generally accomplished by proper placement of a conductive coil. When another electrically conductive material is exposed to the field, induced current can be created. These induced currents can be in the form of random or "eddy" currents which result in the generation of heat. Materials which are both magnetizable and conductive generate heat more readily than materials which are only conductive. The best generated as a result of the magnetic component is the result of hysteresis or work done in rotating magnetizable molecules and as a result of eddy current flow. Polyolefins and other plastics are neither magnetic nor conductive in their natural states. Therefore, they do not, in themselves, create heat as a result of induction.

The use of the electromagnetic induction heating method for adhesive bonding of plastic structures has proved feasible by interposing selected electromagnetic energy absorbing materials in an independent bonding composition layer or gasket conforming to the surfaces to be bonded, electromagnetic energy passing through the adjacent plastic structures (free of such energy absorbing materials) is readily concentrated and absorbed in the adhesive composition by such energy absorbing materials thereby rapidly initiating cure of the adhesive composition to a thermoset adhesive.

Electromagnetic energy absorbing materials of various types have been used in the electromagnetic induction heating technique for some time. For instance, inorganic oxides and powdered metals have been incorporated in bond layers and subjected to electromagnetic radiation. In each instance, the type of energy source influences the selection of energy absorbing material. Where the energy absorbing material comprises finely divided particles having ferromagnetic properties and such particles are effectively insulated from each other by particles containing non-conducting matrix material, the heating effect is substantially confined to that resulting from the effects of hysteresis. Consequently, heating is limited to the "Curie" temperature of the ferromagnetic material or the temperature at which the magnetic properties of such material cease to exist.

The bonding composition used in the process according to the present invention may take the form of an extruded ribbon or tape, a moulded gasket or cast sheet.

5

The foregoing bonding composition, when properly utilized as described hereinafter, results in a solvent-free bonding system which permits the joining of metal or plastic items without costly surface pretreatment. The electromagnetically induced bonding reaction occurs rapidly and is adaptable to automated fabrication techniques and equipment.

To accomplish the establishment of a concentrated and specifically located heat zone by induction heating in the context of bonding in accordance with the invention, it has been found that the bonding compositions described above can be activated and a bond created by a induction heating system operating with an electrical frequency of the electromagnetic field of from about 5 to about 30 megacycles and preferably from about 15 to 30 megacycles, said field being generated from a power source of from about 1 to about 30 kilowatts, and preferably from about 2 to about 5 kilowatts. The electromagnetic field is applied to the articles to be bonded for a period of time of less than about 2 minutes.

As heretofore mentioned, the bonding system and improved bonding compositions used in the process according to the present invention are applicable to the bonding of metals, thermoplastic and thermoset material, including fibre reinforced thermoset material.

The following Examples further illustrate the invention.

Examples 1 and 2

A highly RF (radio frequency) susceptible IPN adhesive film was compounded in the melt state at 180°C from a dry blend of block copolymer, polypropylene and a commercial blend of poly(vinyl chloride) and Nitrile rubber (GEON 8720, B. F. Goodrich), "GEON" is a trade mark. The block copolymer employed here was selectively hydrogenated having a structure styrene-ethylene/1-butene-styrene and block molecular weights of about 10,000—50,000—10,000 as measured by gel permeation chromatography (GPC). Two formulations (IPN blends A and B) were tested and are listed hereinafter; Example 1 refers to IPN blend A and Example 2 to IPN blend B.

| Example | 1 | 2 |
| IPN Blend | A | B |
| --- | --- | --- |
| Block copolymer | 15 g | 15 g |
| Polypropylene | 30 g | 15 g |
| PVC/Nitrile Rubber Blend (GEON 8720) | 15 g | 30 g |
| Irganox 1010 | 0.76 g | 0.76 g |

"Irganox" is a trade mark for an anti-oxidant.

Thin compression moulded films of the two blends were positioned between two sheets of continuous glass reinforced polyproplene (52% fibreglass by weight) of the trade mark AZDEL, clamped with approximately 0.70 kg/cm$^2$ force between two parallel electrodes, and subjected to a 100 MHz RF field until melting of the adhesive film was evident. The AZDEL sheet itself remained "cool-to-touch" during the heating process.

Listed below are the measured lap shear strengths obtained for the two adhesive films.

| IPN blend | IPN film thickness mm | Lap shear strength kg/cm$^2$ |
| --- | --- | --- |
| A | 1.22 | 36.1 |
| A | 0.51 | 34.0 |
| B | 0.46 | 19.6 |
| B | 0.36 | 25.7 |
| B | 1.22 | 31.1 |

All of the failures were cohesive in nature.

**Claims**

1. A process for bonding polymeric and/or metal materials by contacting the surfaces of the materials to be bonded with a bonding composition, characterized in that use is made of a bonding composition comprising an admixture obtained by intimately mixing

(a) 4 to 96 parts by weight of a block copolymer comprising at least two monoalkenylarene polymer end blocks A and at lesat one substantially completely hydrogenated conjugated diene mid block B, said block copolymer having an 8 to 55 per cent by weight monoalkenylarene polymer block content, each polymer block A having an average molecular weight of between 5,000 and 125,000, and each polymer block B having an average molecular weight of between 10,000 and 300,000, and

(b) 96 to 4 parts by weight of one or more thermoplastic polymers at least one of which will adhere to each of the surfaces of the materials to be bonded, and heating the bonding composition so as to form a fusion bond.

2. A process as claimed in claim 1, in which two polymeric materials are bonded.

3. A process as claimed in claim 1 or 2, wherein radio frequency energy is used to heat the bonding material.

4. A process as claimed in claim 1 or 2, wherein inductive heating is used to heat the bonding composition.

5. A process as claimed in claim 1 or 2, wherein dielectric heating is used to heat the bonding composition for bonding polymeric material on polymeric material or polymeric material on metal.

6. A process as claimed in claims 2 and 4, wherein the bonding composition also contains an energy absorbing material.

7. A process as claimed in any one of the preceding claims, wherein the bonding composition is heated to a temperature near the melt temperature of the thermoplastic polymer.

8. A process as claimed in any one of the preceding claims, wherein the block copolymer is a polystyrene-polybutadiene-polystyrene block copolymer.

9. A process as claimed in any one of claims 1 to 7, wherein the block copolymer is a polystyrene-polyisoprene-polystyrene block copolymer.

10. A process as claimed in any one of claims 1 to 7, wherein the block copolymer is a. poly(alpha-methylstyrene)-polybutadiene-poly(alpha-methylstyrene) block copolymer.

11. A process as claimed in any one of the preceding claims, wherein the bonding composition absorbs more electromagnetic energy than the material to be bonded.

12. A process as claimed in any one of the preceding claims, wherein the thermoplastic polymer is selected from the group consisting of polyolefins, halogenated thermoplastics, thermoplastic polyesters, polyacetals, polyamides, thermoplastic polyurethanes, polycarbonates, polyamides, polysulphones, poly(aryl ethers), and nitrile barrier resins.

**Patentansprüche**

1. Verfahren zum Verbinden von Kunststoffen und/oder metallischen Werkstoffen mit Hilfe einer Bindemasse, dadurch gekennzeichnet, daß die Bindemasse erhalten worden ist durch inniges Mischen von

(a) 4 bis 96 Gew.-Teilen eines Block-Copolymeren, welches zumindest zwei Monoalkylenarenpolymer-Endblöcke A und zumindest einen im wesentlichen vollständig hydrierten Mittelblock B auf der Basis konjugierter Diene enthält, wobei das Block-Copolymere 8 bis 55 Gew.-% Monoalkylenarenpolymer-Blöcks aufweist, jeder Block A ein mittleres Molekulargewicht von 5 000 bis 125 000 und jeder Block B ein mittleres Molekulargewicht von 10 000 bis 300 000 besitzt, und

(b) 96 bis 4 Gew.-Teile von einem oder mehreren thermoplastischen Kunststoffen, von welchen zumindest einer auf jeder der zu bindenden Flächen zu haften vermag, und Erwärmen der Masse unter Bildung einer Schmeizbindung.

2. Verfahren nach Anspruch 1 zur Bindung von zwei Kunststoffen.

3. Verfahren nach Anspruch 1 oder 2, wobei zum Erwärmen der Bindemasse Strahlung mit Radiofrequenz verwendet wird.

4. Verfahren nach Anspruch 1 oder 2, wobei zum Erwärmen der Bindemasse eine Induktionsheizung verwendet wird.

5. Verfahren nach Anspruch 1 oder 2, wobei zum Erwärmen der Bindemasse zum Binden von Kunststoff auf Kunststoff oder Kunststoff auf Metall ein dielektrisches Heizen angewandt wird.

6. Verfahren nach Anspruch 2 und 4, wonach die Bindemasse auch ein energieaufnehmendes Material enthält.

7. Verfahren nach einem der vorhergehenden Ansprüche, wobei die Bindemasse auf eine Temperatur in der Nahe des Schmelzpunkts des thermoplastischen Polymeren erwärmt wird.

8. Verfahren nach einem der vorhergehenden Ansprüche, wobei das Block-Copolymer ein Polystyrol/Polybutadien/Polystyrol-Block-Copolymer ist.

9. Verfahren nach einem der Ansprüche 1 bis 7, wobei das Block-Copolymers ein Polystyrol/Polyisopren/Polystyrol-Block-Copolymer ist.

10. Verfahren nach einem der Ansprüche 1 bis 7, wobei das Block-Copolymer ein Poly(α-methylstyrol)/Polybutadien/Poly(α-methylstyrol)-Block-Copolymer ist.

11. Verfahren nach einem der vorhergehenden Ansprüche, wobei die Bindemasse mehr elektromagnetische Energie als die zu verbindenden Werkstoffs aufzunehmen vermag.

12. Verfahren nach einem der vorhergehenden Ansprüche, worin das thermoplastische Polymere ausgewählt ist aus Polyolefinen, halogenierten Thermoplasten, thermoplastischen Polyestern,

**0 173 379**

Polyacetalen, Polyamiden, thermoplastischen Polyurethanen, Polycarbonaten, Polyamiden, Polysulfonen, Poly(arylethern) und/oder Nitril-Sperrschichthärzen.

## Revendications

1. Procédé pour lier des matériaux polymères et/ou métalliques par la mise en contact des surfaces des matériaux à lier avec une composition liante, caractérisé en ce qu'on utilise une composition liante comprenant un mélange obtenu par malaxage intime

(a) de 4 à 96 parties en poids d'un copolymère séquencé comprenant au moins deux blocs A terminaux de polymère de monoalcénylarène et au moins un bloc B intermédiaire d'un diène conjugué substantiellement totalement hydrogéné, ledit copolymère séquencé comportant 8 à 55% en poids de teneur en blocs de polymère de monoalcénylarène, chaque bloc de polymère A ayant une masse moléculaire moyenne comprise entre 5 000 et 125 000, et chaque bloc de polymère B ayant une masse moléculaire moyenne comprise entre 10 000 et 300 000, et

(b) de 96 à 4 parties en poids d'un ou plusieurs polymères thermoplastiques, dont l'un au moins collera à chacune des surfaces des matériaux à lier, et le chauffage de la composition liante de manière à former une liaison par fusion.

2. Procédé selon la revendication 1, dans lequel deux matériaux polymères sont liés.

3. Procédé selon la revendication 1 ou 2, dans lequel on utilise une énergie radiofréquence pour chauffer le matériau liant.

4. Procédé selon la revendication 1 ou 2, dans lequel on utilise un chauffage par induction pour chauffer la composition liante.

5. Procédé selon la revendication 1 ou 2, dans lequel on utilise un chauffage diélectrique pour chauffer la composition liante, pour lier un matériau polymère sur un matériau polymère ou un matériau polymère sur un métal.

6. Procédé selon les revendications 2 et 4, dans lequel la composition liante contient aussi une matière absorbant l'énergie.

7. Procédé selon l'une quelconque des revendications précédentes, dans lequel la composition liante est chauffée à une température proche de la température de fusion du polymère thermoplastique.

8. Procédé selon l'une quelconque des revendications précédentes, dans lequel le copolymère séquence est un copolymère séquencé polystyrène-polybutadiène-polystyrène.

9. Procédé selon l'une quelconque des revendications 1 à 7, dans lequel le copolymère séquence est un copolymère séquencé polystyrène-polyisoprène-polystyrène.

10. Procédé selon l'une quelconque des revendications 1 à 7, dans lequel le copolymère séquencé est un copolymère séquencé poly(α-méthylstyrène)-polybutadiène-poly(α-méthylstyrène).

11. Procédé selon l'une quelconque des revendications précédentes, dans lequel la composition liante absorbe plus d'énergie électromagnétique que le matériau à lier.

12. Procédé selon l'une quelconque des revendications précédentes, dans lequel le polymère thermoplastique est choisi dans le groupe constitué par les polyoléfines, les thermoplastiques halogénés, les polyesters thermoplastiques, les polyacétales, les polyamides, les polyuréthannes thermoplastiques, les polycarbonates, les polyamides, les polysulfones, les poly(éthers aryliques) et les résines nitriles protectrices.